## Europäisches Patentamt
## European Patent Office
## Office européen des brevets

(19)

(11) Publication number: **0 110 260**
**B1**

(12)

# EUROPEAN PATENT SPECIFICATION

(45) Date of publication of patent specification: **11.11.87**

(21) Application number: **83111524.1**

(22) Date of filing: **18.11.83**

(51) Int. Cl.⁴: **G 01 S 7/28,** G 01 S 7/40, H 01 Q 3/26

(54) Pulse radar apparatus.

(30) Priority: **29.11.82 NL 8204616**

(43) Date of publication of application:
**13.06.84 Bulletin 84/24**

(45) Publication of the grant of the patent:
**11.11.87 Bulletin 87/46**

(84) Designated Contracting States:
**BE CH DE FR GB IT LI NL SE**

(56) References cited:
**US-A-3 471 855**

**PROCEEDINGS OF THE IEEE, vol. 64, no. 10, October 1976, pages 1493-1504, New York, USA; K.IIZUKA et al.: "A hologram matrix radar"**

**IEEE EASCON '78 RECORD, IEEE PUBLICATION , 25th-27th September 1978, pages 152-163, New York, USA; A.E.RUVIN et al.: "Digital multiple beamforming techniques for radar"**

(73) Proprietor: **HOLLANDSE SIGNAALAPPARATEN B.V.**
**Zuidelijke Havenweg 40 P.O. Box 42**
**NL-7550 GD Hengelo (NL)**

(72) Inventor: **Gellekink, Bernard**
**Winhofflaan 3**
**NL-7631 HX Ootmarsum (NL)**
Inventor: **Hol, Willem Andries**
**R. Stolzstraat 134**
**NL-7558 CD Hengelo (NL)**

(74) Representative: **Kradolfer, Theodorus Albertus Clemens, Drs.**
**Patent Department Hollandse Signaalapparaten B.V. P.O. Box 42**
**NL-7550 GD Hengelo (NL)**

(56) References cited:
**PROCEEDINGS OF THE IEE, vol. 117, no. 2, February 1970, pages 351-358, Stevenage, GB; A.W.RUDGE et al.: "Electronically controllable primary feed for profile-error compensation of large parabolic reflectors"**

Courier Press, Leamington Spa, England.

## Description

The invention relates to a pulse radar apparatus as defined in the preamble of Claim 1 or Claim 2.

Such a pulse radar apparatus is known from: Abraham E. Ruvin and Leonard Weinberg: "Digital Multiple Beamforming Techniques for Radar", IEEE EASCON '78 Record, pp. 152—163, Sept. 25—27, 1978, IEEE Publication 78 CH 1352-4 AES. In this pulse radar apparatus, errors in the beamformer output signals will be incurred, because of mutual differences in gain and phase shift in the various receivers. Differences in gain disturb the applied weighting factors and hence the desired reduction of sidelobes. A difference in the phase shift has the effect that the beamformer regards the target to be coming from a direction other than the true direction. Moreover, phase errors disturb the desired sidelobe suppression. The present invention has for its object to eliminate this kind of errors as much as possible.

According to the invention, this problem is solved by the pulse radar apparatus of Claim 1. An alternative solution is defined in Claim 2.

By means of the invention, a correction of the beamformer input signals is obtained. In contrast thereto, it is known from Proc. IEEE vol. 64 No. 10, 1976 pp. 1493—1504 to compensate for amplitude and phase distortions suffered by a radar signal in a plurality of different receiver channels by processing the output signals from these channels mathematically without using a processor incorporated in a feedback loop as in the claimed apparatus. In the operational mode a weighting function varying in vertical direction is applied, while during a gain- and phase-correction cycle, which may be executed once or several times per radar sweep, a constant is introduced as weighting function.

The invention will now be explained in more detail with reference to the accompanying figures, of which:

Fig. 1 shows a first embodiment of the pulse radar apparatus according to the invention;

Fig. 2 is a diagram illustrating the beam directions, as determinable by the beamformer.

Fig. 3 illustrates a diagram of a specific beam pattern, as determined by the beamformer with the application of equal and different weighting factors; and

Fig. 4 shows a second embodiment of the pulse radar apparatus according to the invention.

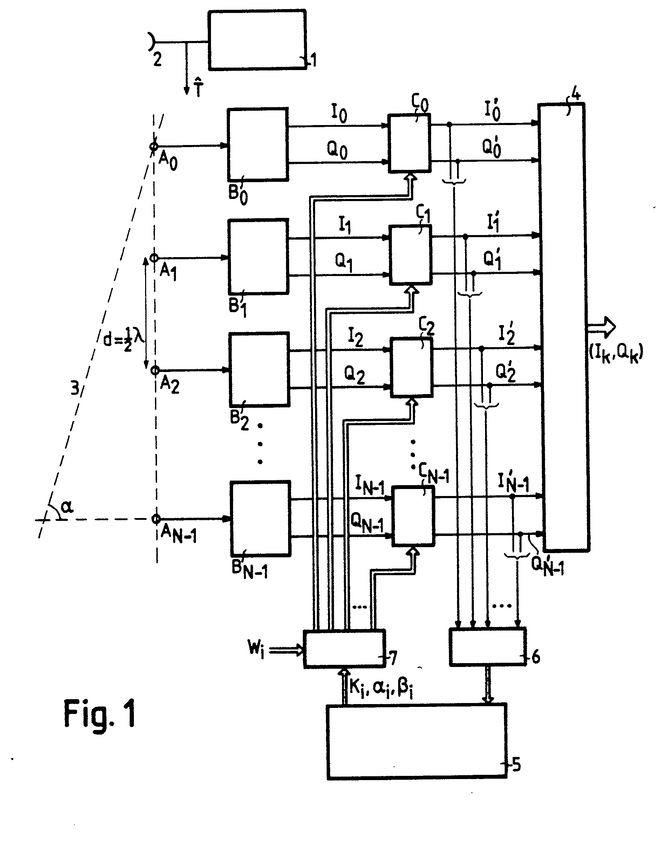

The pulse radar apparatus of Fig. 1 comprises a coherent transmitting and receiving unit, including a transmitter 1 and a transmitting antenna for the transmission of radar pulses and the generation of test signals $\hat{T}$, and N vertically disposed receiving antennas $A_0$, $A_1$,..., $A_{N-1}$ with receivers $B_0$, $B_1$,..., $B_{N-1}$ connected thereto for the reception of echo signals and the processing thereof in each of the receivers into two orthogonally phase-detected and digitised video signal components $I_i$ and $Q_i$, where $i=0, 1,..., N-1$. If the transmitter signal be represented by $F(t) \cdot e^{2\pi j f_o t}$, where $f_o$ is the transmitter frequency and $F(t)$ the envelope of the transmitter pulse, the echo signal received by antenna $A_i$ can be expressed by

$$G(t) \cdot e^{2\pi j[(f_o+f_d)t+\varphi+f_o \cdot idcos\alpha/c]},$$

where $G(t)$ is the envelope of the echo signal, $f_d$ the Doppler frequency, d the mutual distance of the receiving antennas, $\alpha$ the elevation angle at which wavefront 3 from the target is incident on the receiving antennas, c the velocity of light, and $\varphi$ a phase angle depending on the target range. The echo signal transformed to intermediate frequency in receiver $B_i$ and subsequently coherently phase-detected is expressed by

$$G(t) \cdot e^{2\pi j[f_d t+f_o \cdot idcos\alpha/c]},$$

or, with $c=\lambda \cdot f_o$ and $d=\frac{1}{2}\lambda$, by $g(t, f_d) \cdot e^{\pi j i cos\alpha}$; the orthogonal components of this signal are $I_i$ and $Q_i$. Receiver $B_i$ supplies these components in digital form. The $I_i$ and $Q_i$ values can be supplied directly to a DFT beamformer 4. The orthogonal components of the video signal determined jointly by the N receivers are delivered by beamformer 4 via output channel k, the video signal being proportional to

$$\sum_{i=0}^{N-1} e^{\pi j i cos\alpha} \cdot e^{-2\pi j i k/N}.$$

The absolute value of the video signal passed via output channel k is proportional to

$$\left| \frac{sin[\frac{1}{2}\pi(cos\alpha-2k/N) \cdot N]}{sin\frac{1}{2}\pi(cos\alpha-2k/N)} \right|$$

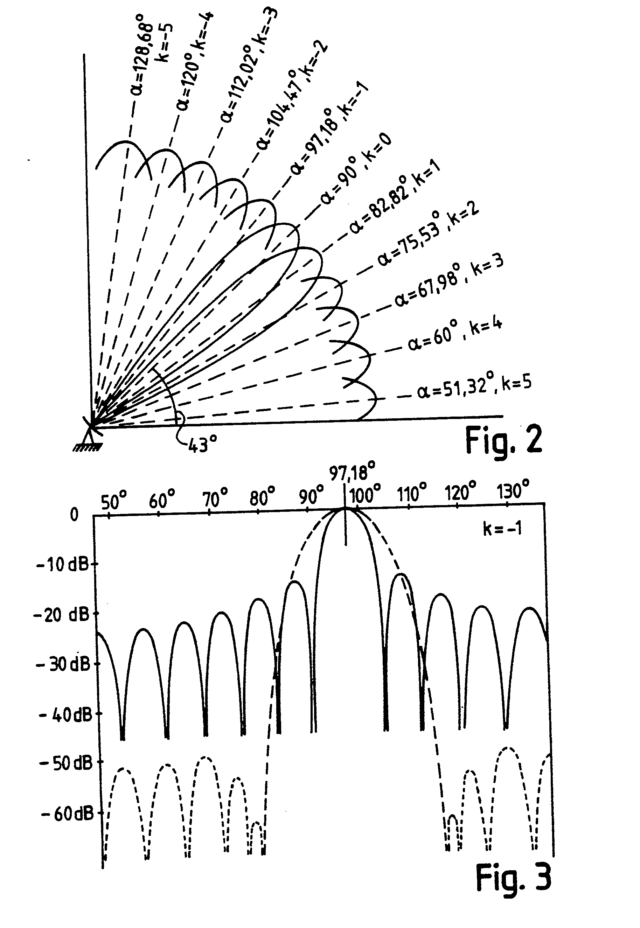

That is, each output channel of beamformer 4 corresponds with a receiving beam pattern, whose main direction is determined by the relationship $cos\alpha=2k/N$. Possible beam directions which are thus determinable are shown in Fig. 2.

If, for example, N=16, so that an FFT can be used as a special form of a DFT for beamformer 4, the main directions of the receiving beam patterns are obtained with $\alpha=0$, 28.96°, 41.41°, 51.32°, 60°,..., 128.68°, 138.59°, 151.04° and 180° for k=8, 7, 6, 5, 4,..., −5, −6, −7, −8. If the antenna system of the pulse radar apparatus is arranged at an angle of 43°, say, only the receiving beam patterns are of concern, where the main directions are obtained with α=51.32°, 60°,..., 128.68° for k=5, 4,..., −5. In such a case, the main directions are of course at angles of α−47° with respect to the horizontal plane (earth's surface). Therefore, of the 16 beam former output channels available in this case, only 11 are used. A target situated at an elevation of, say, 50°, produces a video signal in the output channel denoted by k=−1; the video signal falls within the receiving beam pattern whose main direction α=97.18°, or 50.18° with respect to the horizontal plane.

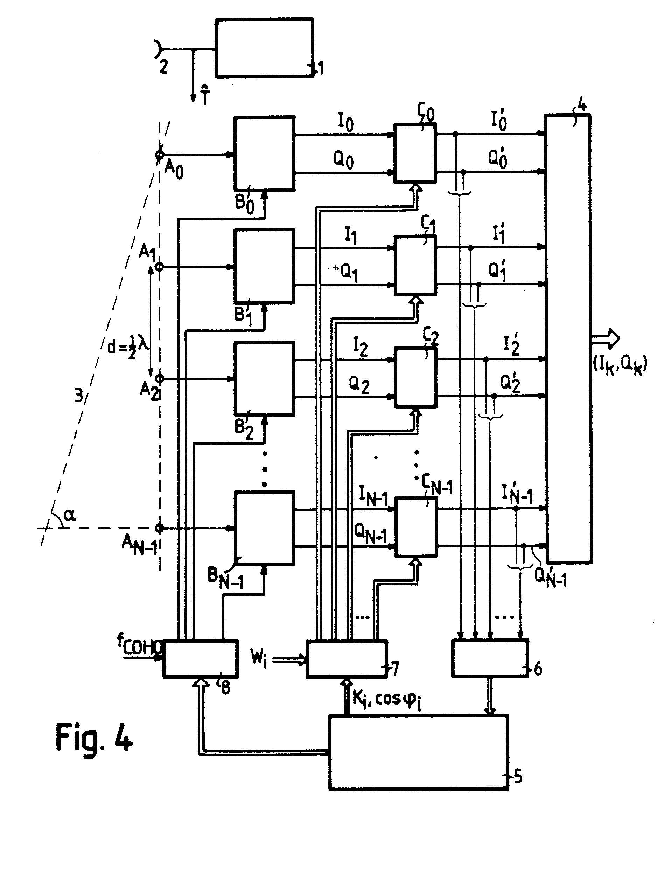

The pulse radar apparatus depicted in Fig. 1 is further provided with transformation circuits $C_0$, $C_1$,..., $C_{N-1}$ for multiplying the $I_i$ and $Q_i$ by a weighting factor $W_i$. These factors form a weighting function varying in vertical direction, the purpose of this function being to reduce sidelobes. The effect thereof is illustrated in Fig. 3. Following the given example, the continuous curves in Fig. 3 are representative of the receiving beam pattern, whose main direction is obtained with α=97.18° for k=−1; this pattern gives the normalised absolute values expressed in dB's for the video signal supplied via output channel k=−1 without the application of a spatially varying weighting function. The dashed curves give these values with a favourably selected weighting function and illustrate the effect of this function on the reduction of sidelobes.

Because of mutual differences in gain and phase shift in receivers $B_0$, $B_1$,..., $B_{N-1}$, errors will occur in the output signals of beamformer 4. Differences in gain disturb the applied weighting function and hence the desired reduction of sidelobes. Differences in phase shift may have the effect that the beamformer regards the target to be coming from a direction other than the true direction and/or disturb the desired reduction of sidelobes. To prevent such errors, the pulse radar apparatus comprises a processor 5 for deriving at any desired moment amplitude and phase correction signals from the beamformer input signals obtained through the test signals under the condition that all weighting factors be of the same constant value, which amplitude and phase correction signals, or at least a portion thereof, are supplied to the transformation circuits $C_0$, $C_1$,..., $C_{N-1}$ to compensate for mutual differences in gain and phase shift between the receivers $B_0$, $B_1$,..., $B_{N-1}$. In the embodiment of Fig. 1, both amplitude correction signals $K_i$ and phase correction signals $α_i$, $β_i$ are fed to the transformation circuits $C_0$, $C_1$,..., $C_{N-1}$. In the embodiment of Fig. 4 described hereinafter the transformation circuits $C_0$, $C_1$,..., $C_{N-1}$ are fed with amplitude correction signals $K_i$ and fine phase-correction signals and the receivers $B_0$, $B_1$,..., $B_{N-1}$ with coarse phase-correction signals. The T̂ test signals can be either injected into the antenna elements or the HF channels of the receivers $B_0$, $B_1$,..., $B_{N-1}$, or received by the receiving antennas $A_0$, $A_1$,..., $A_{N-1}$ via a slot radiator placed in front of these antennas. The test signals are processed in receivers $B_0$, $B_1$,..., $B_{N-1}$ in the conventional way, but all are subsequently multiplied by the same weighting factor. The then obtained signals are not processed in beamformer 4, but supplied to processor 5 via a buffer circuit 6. From the amplitude and phase differences of these signals the processor 5 derives amplitude and phase correction signals $K_i$ and $α_i$, $β_i$, respectively. The amplitude- and phase-correction signals are supplied to the corresponding transformation circuits. In transformation circuit $C_i$, the supplied $I_i$, $Q_i$ signals are converted into $I_i'$, $Q_i'$ signals according to:

$$\begin{cases} I_i' = W_i K_i (α_i I_i + β_i Q_i), \\ Q_i' = W_i K_i (-β_i I_i + α_i Q_i). \end{cases}$$

If $I_i$ and $Q_i$ are the orthogonal components of the $G(t) \cdot e^{j(ω_d t + \pi i \cos α)}$ signal, then $I_i'$ and $Q_i'$ are the orthogonal components of the

$$W_i K_i G(t) e^{j(ω_d t + \pi i \cos α + \arctan β_i / α_i)}$$

signal. That is, the weighting factors $W_i$ are corrected by a factor $K_i$, while the signal receives a phase correction arctan $β_i/α_i$.

In the embodiment of Fig. 4 a distinction is made between coarse and fine phase corrections. Processor 5 thereto comprises means for determining coarse and fine phase-correction signals from the signals supplied via the buffer circuit 6. In a coho phase-correction circuit 8 the phase of the coho signal $f_{coho}$ required for the coherent phase detection in the receivers is corrected for each receiver by the coarse phase-correction signals. Moreover, the fine phase correction, as well as the amplitude correction, can be made in the above way in transformation circuits $C_0$, $C_1$,..., $C_{N-1}$. However, the fine phase correction can then be applied more simply through multiplication by a phase factor $\cos φ_i$ according to:

$$\begin{cases} I_i' = W_i K_i \cos φ_i I_i \\ Q_i' = W_i K_i \cos φ_i Q_i. \end{cases}$$

**Claims**

1. Pulse radar apparatus comprising

— a coherent transmitting and receiving unit including
(i) a transmitter (1),
(ii) a transmitting antenna (2) for the transmission of pulse radar signals generated by the transmitter in a measurement phase,
(iii) a plurality of N juxtaposed receiving antennas ($A_o - A_{N-1}$),
(iv) a corresponding number of receivers ($B_o - B_{N-1}$) each of which is associated with one of the receiving antennas and, moreover, is arranged to convert the echo signal supplied by its associated antenna into a video signal pair of quadrature components $I_i$ and $Q_i$ by means of phase coherent detection, with i=0, 1, 2,... N−1,
— transformation circuits ($C_o - C_{N-1}$) for weighting each video signal pair by an associated weighting factor $W_i$,
— a DFT beamformer (4) receiving the weighted video signal pairs $I'_i$, $Q'_i$ and having a plurality k of output channels, said beamformer being arranged to provide at each of its output channels the quadrature components $I_k$ and $Q_k$ of a video signal indicative of an echo signal from a different one of a plurality of directions,

the apparatus being characterised in that

— the transmitter (1) comprises means enabling the generation of test signals in a test phase,
— a processor (5—7) is provided which receives the weighted video signal pairs from the transformation circuits and which is arranged to derive, in selectable periods, from these signal pairs amplitude correction signals $K_i$ and phase correction signals $\alpha_i$ and $\beta_i$ representative of the amplitude and phase errors introduced by the receivers into the signal pairs during the application of the test signals and under the condition that all the weighting factors are equal,
— the transformation circuits ($C_o - C_{N-1}$) comprise means receiving the correction signals and deriving the weighted signal pairs $I'_i$, $Q'_i$ from the signal pairs $I_i$, $Q_i$ according to the following relationship:

$$I'_i = W_i K_i (\alpha_i I_i + \beta_i Q_i)$$

$$Q'_i = W_i K_i (-\beta_i I_i + \alpha_i Q_i).$$

2. Pulse radar apparatus comprising

— a coherent transmitting and receiving unit including
(i) a transmitter (1),
(ii) a transmitting antenna (2) for the transmission of pulse radar signals generated by the transmitter in a measurement phase,
(iii) a plurality of N juxtaposed receiving antennas ($A_o - A_{N-1}$),
(iv) a corresponding number of receivers ($B_o - B_{N-1}$) each of which is associated with one of the receiving antennas and, moreover, is arranged to convert the echo signal supplied by its associated antenna into a video signal pair of quadrature components $I_i$ and $Q_i$ by means of phase coherent detection, with i=0, 1, 2,... N−1,
— transformation circuits ($C_o - C_{N-1}$) for weighting each video signal pair by an associated weighting factor $W_i$,
— a DFT beamformer (4) receiving the weighted video signal pairs $I'_i$, $Q'_i$ and having a plurality k of output channels, said beamformer being arranged to provide at each of its output channels the quadrature components $I_k$ and $Q_k$ of a video signal indicative of an echo signal from a different one of a plurality of directions,

the apparatus being characterised in that

— the transmitter (1) comprises means enabling the generation of test signals in a test phase,
— a processor (5—7) is provided which receives the weighted video signal pairs from the transformation circuits and which is arranged to derive, within selectable periods, from these signal pairs amplitude correction signals $K_i$ as well as coarse and fine phase correction signals $\alpha_i$, $\beta_i$ and $\cos\varphi_i$, respectively, which correction signals are representative of the amplitude and phase errors introduced by the receivers in each such signal pair during the application of the test signals to the receivers and under the condition that all weighting factors are made equal,
— the receivers ($B_o - B_{N-1}$) are connected to a coho phase correction circuit (8) arranged to correct, in response to the coarse phase correction signals from the processor, the phase of the coho signal used in the receivers for the phase coherent detection of the echo signals,

4

**0 110 260**

— the transformation circuits ($C_o - C_{N-1}$) comprise means receiving the amplitude correction signals and the fine phase correction signals and deriving the weighted signal pairs $I'_i$, $Q'_i$ from the coarsely corrected signal pairs $I_i$, $Q_i$ according to the following relationship:

$$I'_i = W_i K_i \cos\varphi_i I_i;$$

$$Q'_i = W_i K_i \cos\varphi_i Q_i.$$

**Patentansprüche**

1. Impulsradargerät, versehen mit:

— einer kohärenten Sende- und Empfangseinheit, mit
  (i) einem Sender (1),
  (ii) einer Sendeantenne (2) für das Aussenden von vom Sender in einer Messphase erzeugten Impulsradarsignalen,
  (iii) einer Vielheit von N nebeneinander angeordneten Empfangsantennen ($A_o - A_{N-1}$),
  (iv) einer entsprechenden Anzahl Empfänger ($B_o - B_{N-1}$), von denen jeder einzelne Empfänger einer der Empfangsantennen zugeordnet ist, und weiterhin eingerichtet, um das von der zugehörigen Antenne zugeführte Echosignal in ein den Quadraturkomponenten $I_i$ und $Q_i$ umfassendes Videosignalpaar mit Hilfe von Phasenkohärenzdetektion umzuwandeln, wobei i=0, 1, 2,..., N−1,
— Transformations-Schaltkreisen ($C_o - C_{N-1}$) für die Bewertung eines einzelnen Videosignalpaares mittels eines zugehörigen Bewertungsfaktors $W_i$,
— einem DFT-Bündelformer (4), welcher des bewertete Videosignalpaar $I'_i$, $Q'_i$ empfängt und welcher Bündelformer ausgerüstet ist mit einer Vielheit k an Ausgangskanälen sowie dazu eingerichtet ist, an jedem seiner Ausgangskanäle die Quadraturkomponenten $I_k$ und $Q_k$ eines Videosignals zu generieren, welches kennzeichnend ist für ein Echosignal zwecks Unterscheidung eines anderen Echosignals aus einer der vielen Richtungen,

dadurch gekennzeichnet, dass

— der Sender (1) Mittel zur Generierung von Testsignalen in einer Testphase umfasst,
— ein Prozessor (5—7) für den Empfang der bewerteten Videosignalpaare aus den Transformations-Schaltkreisen vorgesehen ist, welcher Prozessor dazu eingerichtet ist, in wählbaren Perioden, von diesen Signalpaaren Amplituden-Korrektursignale $K_i$ und Phasen-Korrektursignale $\alpha_i$ und $\beta_i$ abzuleiten, welche kennzeichnend sind für die von den Empfängern während der Anwendung der Testsignale in die Signalpaare eingeführten Amplituden- und Phasenfehler, unter der Bedingung, dass alle Bewertungsfaktoren gleich sind,
— die Transformations-Schaltkreise ($C_o - C_{N-1}$) Mittel umfassen, welche die Korrektursignale empfangen, und die bewerteten Signalpaare $I'_i$, $Q'_i$, aus den Signalpaaren, $I_i$, $Q_i$ gemäss nachfolgenden Formeln ableiten:

$$I'_i = W_i K_i (\alpha_i I_i + \beta_i Q_i)$$

$$Q'_i = W_i K_i (-\beta_i I_i + \alpha_i Q_i).$$

2. Impulsradargerät, versehen mit:

— einer kohärenten Sende- und Empfangseinheit, mit
  (i) einem Sender (1),
  (ii) einer Sendeantenne (2) für das Aussenden von vom Sender in einer Messphase erzeugten Impulsradarsignalen,
  (iii) einer Vielheit von N nebeneinander angeordneten Empfangsantennen ($A_o - A_{N-1}$),
  (iv) einer entsprechenden Anzahl Empfänger ($B_o - B_{N-1}$), von denen jeder einzelne Empfänger einer der Empfangsantennen zugeordnet ist, und weiterhin eingerichtet, um das von der zugehörigen Antenne zugeführte Echosignal in ein den Quadraturkomponenten $I_i$ und $Q_i$ umfassendes Videosignalpaar mit Hilfe von Phasenkohärenzdetektion umzuwandeln, wobei i=0, 1, 2,..., N−1,
— Transformations-Schaltkreisen ($C_o - C_{N-1}$) für die Bewertung eines einzelnen Videosignalpaares mittels eines zugehörigen Bewertungsfaktors $W_i$,
— einem DFT-Bündelformer (4), welcher das bewertete Videosignalpaar $I'_i$, $Q'_i$ empfängt und welcher Bündelformer ausgerüstet ist mit einer Vielheit k an Ausgangskanälen sowie dazu eingerichtet ist, an jedem seiner Ausgangskanäle die Quadraturkomponenten $I_k$ und $Q_k$ eines Videosignals zu generieren, welches kennzeichnend ist für ein Echosignal zwecks Unterscheidung eines anderen Echosignals aus einer der vielen Richtungen,

dadurch gekennzeichnet, dass

5

— der Sender (1) Mittel zur Generierung von Testsignalen in einer Testphase umfasst,

— ein Prozessor (5—7) für den Empfang der bewerteten Videosignalpaare aus den Transformations-Schaltkreisen vorgesehen ist, welcher Prozessor dazu eingerichtet ist, innerhalb von wählbaren Perioden, von diesen Signalpaaren sowohl Korrektursignale $K_i$ als auch Grob- und Fein-Phasenkorrektursignale $\alpha_i$, $\beta_i$ bzw. $\cos\varphi_i$ abzuleiten, welche kennzeichnend sind für die von den Empfängern während der Anwendung der Testsignale in jedes einzelne den Empfängern zugeführte Signalpaar eingeführten Amplituden- und Phasenfehler, unter der Bedingung, dass alle Bewertungsfaktoren abgeglichen worden sind,

— die Empfanger ($B_o - B_{N-1}$) mit einer Koho-Phasenregelschaltung (8) verbunden sind, zwecks Phasenausgleiches des in den Empfängern für die Kohärenzdetektion der Echosignale benutzten Kohosignals als Reaktion auf die Grob-Phasenausgleichssignale aus dem Prozessor,

— die Transformationsschaltkreise ($C_o - C_{N-1}$) Mittel umfassen, welche die Amplitudenkorrektursignale und die Fein-Phasenkorrektursignale empfangen, und die bewerteten Signalpaare $I'_i$, $Q'_i$ aus den grobausgeglichenen Signalpaaren $I_i$, $Q_i$ gemäss nachfolgenden Formeln ableiten:

$$I'_i = W_i K_i \cos\varphi_i I_i;$$

$$Q'_i = W_i K_i \cos\varphi_i Q_i.$$

## Revendications

1. Dispositif de radar à impulsions comprenant:

— une unité cohérente d'émission et de réception comportant
  (a) un émetteur (1)
  (b) une antenne d'émission (2) pour l'émission des signaux radar à impulsions formés par l'émetteur dans une phase de mesure,
  (c) un ensemble de N antennes de réception juxtaposées ($A_o - A_{N-1}$),
  (d) un nombre correspondant de récepteurs ($B_o - B_{N-1}$) dont chacun est associé à l'une des antennes de réception et, de plus, agencé pour convertir le signal écho fourni par son antenne associée en une paire de signaux vidéo ayant des composantes $I_i$ et $Q_i$ en quadrature au moyen d'une détection cohérente de phase, avec $i = 0, 1, 2, \dots N-1$,
— des circuits de transformation ($C_o - C_{N-1}$) pour pondérer chaque paire de signaux vidéo par un coefficient de pondération associé $W_i$,
— un dispositif de formation de faisceaux DFT (4) recevant les paires pondérées de signaux vidéo $I'_i$, $Q'_i$ et ayant un ensemble k de canaux de sortie, ledit dispositif de formation de faisceaux étant agencé pour fournir à chacun de ses canaux de sortie les composantes en quadrature $I_k$ et $Q_k$ d'un signal vidéo correspondant à un signal écho provenant d'une direction différente parmi un ensemble de direction, le dispositif étant caractérisé en ce que:
— l'émetteur (1) comporte des moyens permettant la génération de signaux de test dans une phase de test,
— un processeur (5—7) est prévu, lequel reçoit les paires de signaux vidéo pondérés provenant des circuits de transformation et qui est construit pour déduire, dans des périodes à sélectionner, à partir de ces paires de signaux, des signaux de correction d'amplitude $K_i$ et des signaux de correction de phase $\alpha_i$ et $\beta_i$ représentatifs des erreurs d'amplitude et de phase introduites par les récepteurs dans les paires de signaux pendant l'application des signaux de test et sous la condition que tous les coefficients de pondération sont égaux,
— les circuits de transformation ($C_o - C_{N-1}$) comprennent des moyens recevant les signaux de correction et déduisant les paires de signaux pondérés $I'_i$, $Q'_i$ provenant des paires de signaux $I_i$, $Q_i$ selon la relation suivante:

$$I'_i = W_i K_i (\alpha_i I_i + \beta_i Q_i)$$

$$Q'_i = W_i K_i (-\beta_i I_i + \alpha_i Q_i).$$

2. Dispositif de radar à impulsions comprenant:

— une unité cohérente d'émission et de réception comportant
  (a) un émetteur (1)
  (b) une antenne d'émission (2) pour l'émission de signaux radar à impulsions formés par l'émetteur dans une phase de mesure,
  (c) un ensemble de N antennes de réception juxtaposées ($A_o - A_{N-1}$),
  (d) un nombre correspondant de récepteurs ($B_o - B_{N-1}$) dont chacun est associé à l'une des antennes de réception et, de plus, agencé pour convertir le signal écho fourni par son antenne associée en une paire de signaux vidéo ayant des composantes $I_i$ et $Q_i$ en quadruture au moyen d'une détection cohérente de phase, avec $i = 0, 1, 2, \dots N-1$,

— des circuits de transformation ($C_o$—$C_{N-1}$) pour pondérer chaque paire de signaux vidéo par un coefficient de pondération associé $W_i$,

— un dispositif de formation de faisceaux DFT (4) recevant les paires pondérées de signaux vidéo $I'_i$, $Q'_i$ et ayant un ensemble k de canaux de sortie, ledit dispositif de formation de faisceaux étant agencé pour fournir à chacun de ses canaux de sortie les composantes en quadrature $I_k$ et $Q_k$ d'un signal vidéo correspondant à un signal écho provenant d'une direction différente parmi un ensemble de directions, le dispositif étant caractérisé en ce que:

— l'émetteur (1) comporte des moyens permettant la génération de signaux de test dans une phase de test,

— un processeur (5—7) est prévu, lequel reçoit les paires de signaux vidéo pondérés provenant des circuits de transformation et qui est construit pour déduire, dans des périodes à sélectionner, à partir de ces paires de signaux, des signaux de correction d'amplitude $K_i$ et des signaux de correction de phase grossière et fine $\alpha_i$, $\beta_i$ et $\cos\varphi_i$, respectivement, signaux de correction qui sont représentatifs des erreurs d'amplitude et de phase introduites par les récepteurs dans les paires de signaux pendant l'application des signaux de test aux récepteurs et sous la condition que tous les coefficients de pondération sont égaux,

— les récepteurs ($B_o$—$B_{N-1}$) sont connectés à un circuit (8) à oscillateur cohérent de correction de phase agencé pour corriger en réponse aux signaux de correction grossière de phase provenant du processeur, la phase du signal de l'oscillateur cohérent utilisé dans les récepteurs pour la détection cohérente de phase de signaux échos,

— les circuits de transformation ($C_o$—$C_{N-1}$) comprennent des moyens recevant les signaux de correction d'amplitude et les signaux de correction de phase fine et déduisant les paires de signaux pondérés $I'_i$, $Q'_i$ provenant des paires de signaux grossièrement corrigés $I_i$, $Q_i$, selon la relation suivante:

$$I'_i = W_i K_i \cos\varphi_i I_i;$$

$$Q'_i = W_i K_i \cos\varphi_i Q_i.$$

Fig. 1

α=128,68°, k=-5
α=120°, k=-4
α=112,02°, k=-3
α=104,47°, k=-2
α=97,18°, k=-1
α=90°, k=0
α=82,82°, k=1
α=75,53°, k=2
α=67,98°, k=3
α=60°, k=4
α=51,32°, k=5

43°

**Fig. 2**

97,18°

50° 60° 70° 80° 90° 100° 110° 120° 130°

k=-1

0
-10 dB
-20 dB
-30 dB
-40 dB
-50 dB
-60 dB

**Fig. 3**

**Fig. 4**